# EUROPEAN PATENT SPECIFICATION

(11) **EP 4 094 898 B1**
(45) Date of publication and mention of the grant of the patent: **07.10.2026**
(21) Application number: 22157961.8
(22) Date of filing: 22.02.2022
(51) Int. Cl.: B25J 9/16

(54) **WORK SUPPORT DEVICE, WORK SUPPORT METHOD, AND COMPUTER PROGRAM PRODUCT SUPPORTING WORK**
ARBEITSUNTERSTÜTZUNGSVORRICHTUNG, ARBEITSUNTERSTÜTZUNGSVERFAHREN UND COMPUTERPROGRAMMPRODUKT
DISPOSITIF DE SUPPORT DE TRAVAIL, PROCÉDÉ DE SUPPORT DE TRAVAIL ET PRODUIT-PROGRAMME INFORMATIQUE SUPPORTANT LE TRAVAIL

(30) Priority: 27.05.2021 JP 2021088903
(43) Date of publication of application: 30.11.2022
(73) Proprietor: KABUSHIKI KAISHA TOSHIBA, Kawasaki-shi, Kanagawa 212-0013 (JP)
(72) Inventor: Higo, Ryosuke, Minato-ku, Tokyo (JP); Nakamoto, Hideichi, Minato-ku, Tokyo (JP); Ishihara, Yoshiyuki, Minato-ku, Tokyo (JP)
(74) Representative: Hoffmann Eitle

(56) References cited:
- WO-A1-2020/014736
- US-A1- 2011 004 343
- US-A1- 2011 106 311
- US-A1- 2017 277 167
- US-A1- 2020 377 339
- US-A1- 2020 406 464
- US-A1- 2021 001 492

## Description

### FIELD

Arrangements described herein relate generally to a work support device, a work support method, and a computer program product supporting work.

### BACKGROUND

Devices for supporting work in a work space, such as an elevator shaft, are known. For example, a system that performs work support by a robot mechanism or the like mounted on a work table in a work space is disclosed. In addition, a system that estimates a position of a work target portion such as a hole or a bolt from a 3D model of a work space and supports work with respect to the estimated position is disclosed. In addition, a technique is disclosed for supporting work on a work target portion of a wall surface by adjusting an inclination of a tool using a detection result of an angle between the wall surface and the tool such that an axis of the tool is made to be perpendicular to the wall surface.

However, the work table disposed in the work space may shake in the work space. In the conventional technique, accurate alignment is difficult due to shaking of the work table or the like, and the work accuracy may deteriorate.

US 2011/106 311 A1 describes an apparatus executing movement control that causes a robot arm equipped with a camera to move up to an object, thereby enabling to cause a manipulator to move to an object quickly, accurately, and stably as a control system. Specifically, when the object is not detected, the apparatus executes teaching playback control to cause a manipulator to move along a path up to a target position set in advance based on a position of the object (Step S1). When the object is detected, the apparatus defines a position closer to the object than the target position as a new target position, sets a new path up to the new target position, executes teaching playback control to cause the manipulator to move along the new path until a switching condition for switching the movement control is fulfilled (Steps S3 and S4). When the switching condition is fulfilled, the apparatus executes visual servo control (Step S5).

US 2021/001 492 A1 describes a method for visually controlling a robot arm which is displaceable in a plurality of degrees of freedom, the robot arm carrying at least one displaceable reference point, includes the steps of: a) placing at least one camera so that a target point where the reference point is to be placed is contained in an image output by the at least one camera; b) displacing the robot arm so that the reference point is within the image; c) determining a vector which, in the image, connects the reference point to the target point; d) choosing one of the plurality of degrees of freedom, moving the robot arm by a predetermined standard distance in the one degree of freedom, and recording a standard displacement of the reference point within the image resulting from the movement of the robot arm; e) repeating step d) at least until the vector can be decomposed.

US 2011/004 343 A1 describes a position control method for controlling a position of a movable portion, including: performing control of allowing the movable portion to approach a predetermined position by moving the movable portion; and performing control of moving the movable portion to the predetermined position by moving the movable portion and detecting a relative position of the movable portion with respect to the predetermined position by using an imaging unit.

WO 2020/014 736 A1 describes a system for performing interactions within a physical environment, the system including: (a) a robot base; (b) a robot base actuator that moves the robot base relative to the environment; (c) a robot arm mounted to the robot base, the robot arm including an end effector mounted thereon; (d) a tracking system that measures at least one of: (i) a robot base position indicative of a position of the robot base relative to the environment; and, (ii) a robot base movement indicative of a movement of the robot base relative to the environment; (e) an active damping system that actively damps movement of the robot base relative to the environment; and, (f) a control system that: (i) determines a movement correction in accordance with signals from the tracking system; and, (ii) controls the active damping system at least partially in accordance with the movement correction.

US 2020/377 339 A1 describes a method for mounting a guide rail in an elevator system elevator shaft first carries out mounting steps by a mounting device having a carrier component, an installation component and a control apparatus controlling the installation component. The control apparatus determines, on the basis of an actual position of the mounting device and a desired position of a guide rail to be installed, a position of a marking on a shaft wall of the elevator shaft relative to the actual position of the mounting device. Based on the marking, an installation step determines the desired position of the guide rail. The marking is applied to the shaft wall by the installation component. The previous steps are followed by the steps of alignment the guide rail in relation to the marking and fastening the guide rail to the shaft wall, which steps can be performed manually by an installer.

US 2017/277 167 A1 describes a robot system comprising, an imaging unit, a robot, and a robot control device that causes the robot to have a plurality of pieces of conversion information which convert first information which represents a position and posture of a target object in an imaging unit coordinate system representing a position and posture on an image captured by the imaging unit to second information representing a position and posture of the target object in a first coordinate system, to select one conversion information, as a target conversion information, out of the plurality of pieces of conversion information, and to perform a predetermined work based on the selected conversion information.

US 2020/406 464 A1 describes a robot system comprising, an imaging unit, a robot, and a robot control device that causes the robot to have a plurality of pieces of conversion information which convert first information which represents a position and posture of a target object in an imaging unit coordinate system representing a position and posture on an image captured by the imaging unit to second information representing a position and posture of the target object in a first coordinate system, to select one conversion information, as a target conversion information, out of the plurality of pieces of conversion information, and to perform a predetermined work based on the selected conversion information.

### BRIEF DESCRIPTION OF THE DRAWINGS

FIG. 1 is a schematic diagram of a work support system;
FIG. 2 is a schematic diagram of a work support device;
FIG. 3 is a functional block diagram of the work support device;
FIG. 4 is a schematic diagram of a captured image;
FIG. 5 is a schematic diagram of a work support device;
FIG. 6 is a schematic diagram of a captured image;
FIG. 7 is a schematic diagram of a template image;
FIG. 8 is a schematic view illustrating bolt-fastening work;
FIG. 9A is an explanatory diagram of control according to a shake amount of a work table;
FIG. 9B is an explanatory diagram of control according to a shake amount of the work table;
FIG. 10 is a flowchart of information processing; and
FIG. 11 is a hardware configuration diagram.

### DETAILED DESCRIPTION

The underlying problem is solved by the subject matter of the independent claims. Examples and technical descriptions of apparatuses, products and/or methods in the description and/or drawings which are not covered by the claims are presented not as embodiments of the invention but as background art or examples useful for understanding the invention. Hereinafter, a work support device, a work support method, and a work support program will be described in detail with reference to the accompanying drawings.

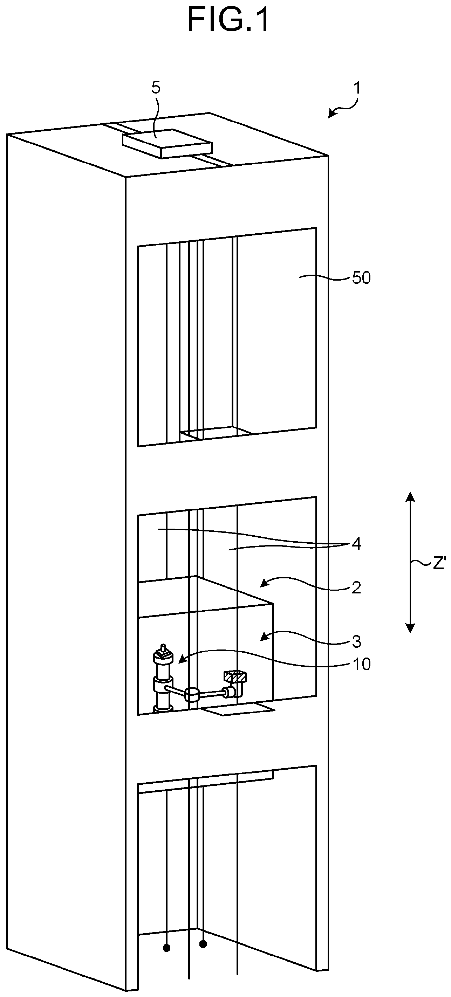

FIG. 1 is a schematic diagram illustrating an example of a work support system 1 according to the present arrangement.

A work support system 1 is a system for supporting a user working in a work space 2.

The work space 2 is a space having a size that allows a user to work inside the work space 2. For example, the work space 2 is a hoistway for an elevator, a tunnel in which an object such as a vehicle moves inside, a sewer, or the like. In the present arrangement, a case where the work space 2 is a hoistway for an elevator will be described as an example. The elevator hoistway may be referred to as an elevator shaft.

In the work space 2, an elevator that moves along an extending direction (direction of arrow Z') of the work space 2 is disposed, and the elevator moves along the extending direction. Hereinafter, the extending direction of the work space 2 may be referred to as an extending direction Z'. In the present arrangement, a case where the extending direction Z' coincides with the vertical direction will be described as an example. Note that the extending direction Z' may be any extending direction of the passage of the work space 2, and is not limited to an arrangement in which it matches the vertical direction. Furthermore, two directions, which are orthogonal to the extending direction Z', are described as a direction X' and a direction Y'. The direction X' and the direction Y' are orthogonal to each other.

In the present arrangement, a description will be given on the assumption of a scene where a work table 3 is installed in the work space 2 and a user on the work table 3 works in the work space 2 at the time of maintenance of the work support system 1 or the like.

The work table 3 is disposed in the work space 2 at the time of maintenance or the like, and is configured to be detachable from the work space 2. The work table 3 disposed in the work space 2 is supported by a displacement member 5 disposed at the top of the work space 2 via a wire 4. The displacement member 5 allows the work table 3 to move in the work space 2 in the extending direction Z'. That is, the work table 3 is an example of a moving member that moves in the work space 2. FIG. 1 illustrates an example in which the work table 3 is supported by two wires 4. However, the number of work tables 3 is not limited to two as long as the work table 3 is supported by one or more wires 4.

The work table 3 may be installed in a gondola unit used at the time of assembly such as a normal elevator. The work table 3 may be a gondola unit. The work table 3 may be a unit prepared exclusively for the work support system 1. The work table 3 may be installed in an elevator car that moves in the work space 2. The work table 3 may be an elevator car.

A work support device 10 is installed on a work table 3 arranged in the work space 2. The work support device 10 is placed on the work table 3 so as to be movable in the work space 2 in the extending direction Z'.

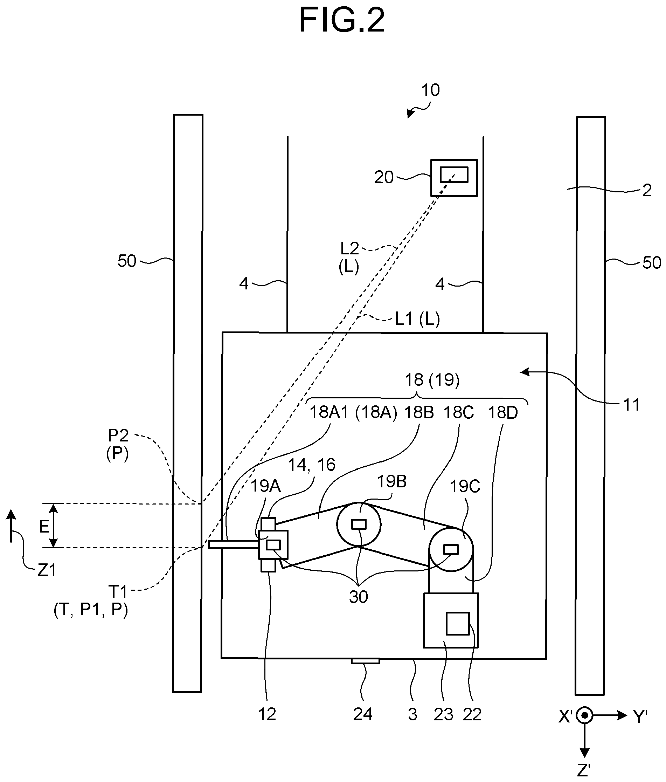

FIG. 2 is a schematic diagram of an example of the work support device 10.

The work support device 10 includes a robot mechanism unit 11 and a laser irradiation unit 20. The robot mechanism unit 11 and the laser irradiation unit 20 are communicably connected.

The robot mechanism unit 11 is a main body of the work support device 10. The robot mechanism unit 11 is mounted on the work table 3.

The laser irradiation unit 20 emits laser light L. For example, the laser irradiation unit 20 is fixedly installed on the inner wall surface of the work space 2. The laser irradiation unit 20 may be mounted on the work table 3 or the robot mechanism unit 11. However, from the viewpoint of improving the irradiation accuracy, it is preferable that the laser irradiation unit 20 is fixedly installed on the inner wall surface of the work space 2.

In the present arrangement, the laser irradiation unit 20 irradiates a work target portion T of a work target 50 with the laser light L under the control of a control unit 22 described later.

The work target 50 is a target member to be worked by the robot mechanism unit 11. The work target 50 is, for example, a structure such as a wall in the work space 2. The work target portion T is a work target region or a work target object in the work target 50. The work target portion T is, for example, a hole or a region of the work target 50 to be provided with a hole, a member such as a screw or a bolt attached to the work target 50, or the like. FIG. 2 illustrates a mode in which the work target portion T is a drilling target region T1 as an example.

The robot mechanism unit 11 includes an image capturing unit 12, a distance sensor 14, a force sensor 16, an arm mechanism 18, a control unit 22, and a shake amount sensor 24.

The arm mechanism 18 is an assist mechanism for holding a tool portion 18A. In other words, the arm mechanism 18 is a mechanism for supporting handling of the tool portion 18A. The arm mechanism 18 is mounted on the work table 3. In the present arrangement, the arm mechanism 18 is installed on the work table 3 via a support table 23.

The tool portion 18A is a member used at the time of working in the work space 2. The tool portion 18A is provided at an end portion of the arm mechanism 18 in the extending direction. The tool portion 18A is, for example, various tools or tools such as an electric drill, an impact driver, and various attachment members for attaching a bracket, a guide rail, a counterweight, a component, and the like. FIG. 1 illustrates an example in which the tool portion 18A is an electric drill 18A1.

The arm mechanism 18 includes, for example, a tool portion 18A, an arm portion 18B, an arm portion 18C, and an arm portion 18D. The tool portion 18A and the plurality of arm portions (18B, 18C, 18D) are connected by one or more joint portions 19. In the present arrangement, the tool portion 18A and the arm portion 18B are connected by a joint portion 19A. The arm portion 18B and the arm portion 18C are connected by a joint portion 19B. The arm portion 18C and the arm portion 18D are connected by a joint portion 19C.

The joint portion 19 is provided with a drive unit 30. When the joint portion 19 is driven by the drive of the drive unit 30, the position of each joint portion 19, the position of the tool portion 18A of the arm mechanism 18, and the posture of the arm mechanism 18 are adjusted.

The joint portion 19A is provided with the image capturing unit 12, the distance sensor 14, and the force sensor 16.

The image capturing unit 12 acquires the captured image data by imaging. Hereinafter, the captured image data will be referred to as a captured image. In the present arrangement, the image capturing unit 12 acquires the captured images of the tool portion 18A and the work target portion T. The image capturing unit 12 only needs to be provided at a position where captured images of the tool portion 18A and the work target portion T can be acquired, and is not limited to an arrangement in which it is provided in the joint portion 19A. In addition, the work support device 10 may include a plurality of image capturing units 12. In this case, the plurality of image capturing units 12 may acquire the captured images of the tool portion 18A and the work target portion T.

The distance sensor 14 is a sensor for measuring the distance between the tool portion 18A and the work target 50. Specifically, the distance sensor 14 measures the shortest distance between the distal end of the tool portion 18A and the work target 50. As the distance sensor 14, a known sensor capable of measuring a distance may be used. The distance sensor 14 only needs to be disposed at a position where the distance between the tool portion 18A and the work target 50 can be measured, and is not limited to an arrangement in which it is provided in the joint portion 19A.

The force sensor 16 is a sensor that detects a force applied to the tool portion 18A from the outside of the tool portion 18A. In the present arrangement, the force sensor 16 detects a force applied from the work target portion T to the tool portion 18A. The force applied from the work target portion T to the tool portion 18A corresponds to the first force. The force sensor 16 is an example of a detector that detects the first force. The force sensor 16 may be any known sensor capable of detecting a force applied to the tool portion 18A from the outside of the tool portion 18A. The force sensor 16 only needs to be disposed at a position where the force applied to the tool portion 18A from the outside of the tool portion 18A can be detected, and is not limited to an arrangement in which it is provided in the joint portion 19A.

The shake amount sensor 24 is a sensor that detects a shake amount of the work table 3. The shake amount sensor 24 is provided on the work table 3. The shake amount sensor 24 is, for example, an acceleration sensor, a gyro sensor, or the like.

The control unit 22 controls the robot mechanism unit 11. Details of the control unit 22 will be described later.

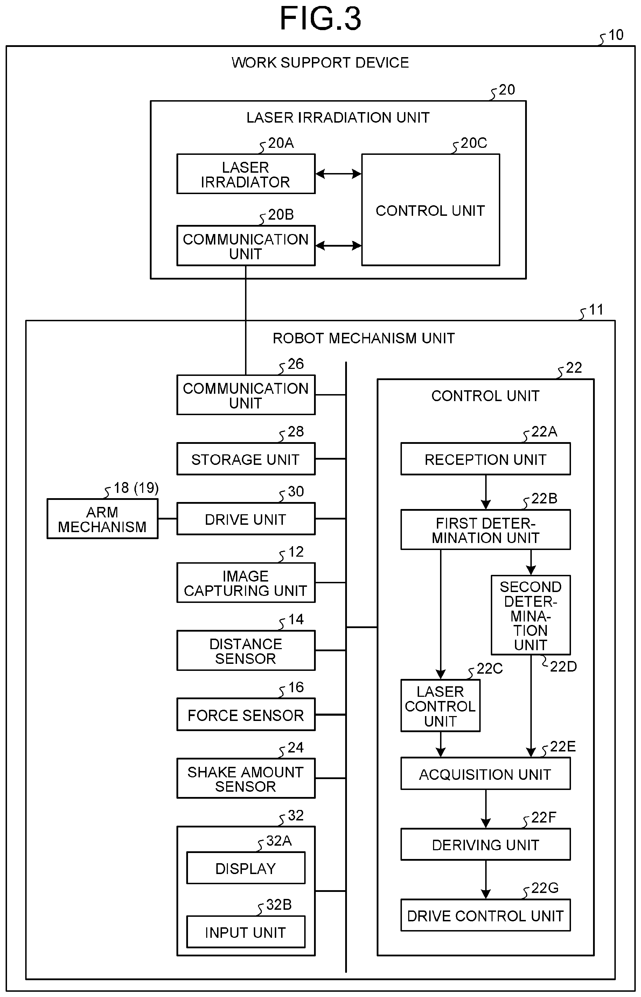

FIG. 3 is a functional block diagram of an example of the work support device 10 according to the present arrangement.

The work support device 10 includes a robot mechanism unit 11 and a laser irradiation unit 20. The robot mechanism unit 11 and the laser irradiation unit 20 are communicably connected.

The laser irradiation unit 20 includes a laser irradiator 20A, a communication unit 20B, and a control unit 20C. The laser irradiator 20A and the communication unit 20B are communicably connected to the control unit 20C.

The laser irradiator 20A is a device that emits the laser light L. The laser irradiator 20A is, for example, a laser pointing device, a projector, or the like, but is not limited thereto. The laser pointing device is, for example, a laser marking device.

The communication unit 20B is a communication function unit that communicates with the robot mechanism unit 11 and another information processing device.

The control unit 20C controls the laser irradiator 20A so as to irradiate the work position defined by the design information corresponding to the work content with the laser light L. By this control, the control unit 20C causes the laser irradiator 20A to irradiate the work target portion T with the laser light L. For example, the control unit 20C acquires design information from the robot mechanism unit 11 via the communication unit 20B. Details of the design information will be described later. The control unit 20C may acquire the design information from an information processing device such as a server device via the communication unit 20B.

Next, the robot mechanism unit 11 will be described.

The robot mechanism unit 11 includes an image capturing unit 12, a distance sensor 14, a force sensor 16, an arm mechanism 18, a control unit 22, a shake amount sensor 24, a communication unit 26, a storage unit 28, a drive unit 30, and a user interface (UI) unit 32.

The image capturing unit 12, the distance sensor 14, the force sensor 16, the shake amount sensor 24, the communication unit 26, the storage unit 28, the drive unit 30, and the control unit 22 are communicably connected via a bus or the like.

The communication unit 26 is a communication function unit that communicates with the laser irradiation unit 20 and other information processing device.

The storage unit 28 stores various types of information. The storage unit 28 stores, for example, management information. The management information is information for managing work. For example, the management information is information defining the position of the work target portion T for each of one or more work contents. Specifically, for example, the management information is information in which a work ID and design information are associated with each other.

The work ID is identification information of the work. For example, the work ID is represented by a number representing a work order or the like. The design information is information regarding the work identified by the corresponding work ID.

The design information includes, for example, work position information, work target portion information, and work content information.

The work position information is information indicating the work position of the work identified by the corresponding work ID. In other words, the work position information is information indicating the position of the work target portion T.

The work target portion information is information indicating the work target portion T. For example, the work target portion information is information indicating the type of the work target portion T, the shape of the work target portion T, the presence or absence of reflection by the laser light L, and the like.

The type of the work target portion T is, for example, information indicating the type of the work target portion T such as the drilling target region T1 and the bolt T2. The information indicating the presence or absence of reflection by the laser light L is information indicating the presence or absence of reflection. The presence of reflection means that when the work target portion T is irradiated with the laser light L, the work target portion T is not captured by the image capturing unit 12 due to reflection of the work target portion T. The absence of reflection means that the work target portion T is imaged by the image capturing unit 12 even if the work target portion T is irradiated with the laser light L. The work content information is information indicating work content of the work target portion T. The work content information is, for example, information indicating the drilling target region T1 which is the work target portion T, bolting of the bolt T2 which is the work target portion T, and the like.

The storage unit 28 may store management information received from an external information processing device or the like via the communication unit 26.

The storage unit 28 is, for example, a random access memory (RAM), a semiconductor memory device such as a flash memory, a hard disk, an optical disk, or the like. The storage unit 28 may be a storage device provided outside the robot mechanism unit 11 or the work support device 10.

The UI unit 32 has a function of receiving an operation input by the user and a function of outputting various types of information. For example, the UI unit 32 includes a display 32A and an input unit 32B.

The display 32A displays various types of information. The display 32A is, for example, a known organic electroluminescence (EL) display, a liquid crystal display (LCD), or the like. The input unit 32B receives various instructions from the user. The input unit 32B is, for example, a keyboard, a mouse, a touch panel, a microphone, or the like.

The control unit 22 is a dedicated or general-purpose computer.

At least one of the storage unit 28 and the control unit 22 may be mounted on an information processing device such as a server device connected to the communication unit 26 via a network. Furthermore, at least one of functional units to be described later included in the control unit 22 may be mounted on an information processing device such as a server device connected to the control unit 22 via the network and the communication unit 26.

The control unit 22 executes information processing.

The control unit 22 includes a reception unit 22A, a first determination unit 22B, a laser control unit 22C, a second determination unit 22D, an acquisition unit 22E, a deriving unit 22F, and a drive control unit 22G.

At least one of the reception unit 22A, the first determination unit 22B, the laser control unit 22C, the second determination unit 22D, the acquisition unit 22E, the deriving unit 22F, and the drive control unit 22G is realized by, for example, one or more processors. For example, each of the above-described units may be realized by causing a processor such as a central processing unit (CPU) to execute a program, that is, by software. Each of the above-described units may be realized by a processor such as a dedicated integrated circuit (IC), that is, hardware. Each of the above-described units may be realized by using software and hardware in combination. In the case of using a plurality of processors, each processor may implement one of the respective units, or may implement two or more of the respective units.

The reception unit 22A receives the work ID from the UI unit 32. The user selects a desired work ID included in the management information by operating the UI unit 32 at the start of work. The reception unit 22A receives the work ID selected by the user.

The first determination unit 22B determines whether laser irradiation is possible. Determining whether laser irradiation is possible means determining whether the work target portion T can be irradiated with the laser light L. For example, the first determination unit 22B determines whether laser irradiation is possible by using information indicating the presence or absence of reflection by the laser light L included in the design information corresponding to the work ID received by the reception unit 22A. Specifically, when the information indicating the presence or absence of reflection by the laser light L included in the work target portion information indicates presence of reflection, the first determination unit 22B determines that laser irradiation is impossible. When the information indicating the presence or absence of reflection by the laser light L included in the work target portion information indicates absence of reflection, the first determination unit 22B determines that laser irradiation is possible.

Note that the first determination unit 22B may determine whether laser irradiation is possible on the basis of the material of the work target portion T. In this case, the management information may be configured to further register material information indicating the material of the work target portion T as the work object information. The first determination unit 22B may determine whether laser irradiation is possible by determining whether the material information corresponding to the work ID is a material that reflects the laser light L.

In addition, the first determination unit 22B may determine that laser irradiation is impossible in a case where a failure of the laser irradiator 20A is detected. In addition, the first determination unit 22B may determine that laser irradiation is possible in a case where the normal operation of the laser irradiator 20A is detected.

When it is determined that laser irradiation is possible, the laser control unit 22C controls the laser irradiation unit 20 to irradiate the work target portion T with the laser light L. For example, the laser control unit 22C specifies the work position information included in the design information corresponding to the work ID in the management information. Then, the laser control unit 22C outputs the specified work position information and information indicating the start of laser irradiation to the laser irradiation unit 20 via the communication unit 26. When receiving the information indicating the start of laser irradiation from the robot mechanism unit 11 via the communication unit 20B, the control unit 20C of the laser irradiation unit 20 controls the laser irradiator 20A to emit the laser light L to the work position indicated by the received work position information. Therefore, under the control of the laser control unit 22C, the work position of the work target portion T is irradiated with the laser light L from the laser irradiator 20A of the laser irradiation unit 20.

Specifically, as illustrated in FIG. 2, the laser irradiation unit 20 irradiates the work position, which is the position of the work target portion T, with the laser light L1. The laser light L1 is an example of the laser light L with which the work target portion T is irradiated. By being irradiated with the laser light L1, a spot region P1 of the laser light L1 is formed at the work position of the work target 50. The spot region P1 is an example of a spot region P. The spot region P is a region of the work target 50 irradiated with the laser light L.

Returning to FIG. 3, the description will be continued.

When the first determination unit 22B determines that laser irradiation is impossible, the second determination unit 22D determines whether template matching processing is possible. The template matching processing represents processing of specifying the work target portion T included in the captured image by searching for the template image from the captured image.

For example, the second determination unit 22D acquires the captured image from the image capturing unit 12. Then, the second determination unit 22D determines whether or not the template matching processing is possible by determining whether or not the work target portion T exists in the acquired captured image. Specifically, the second determination unit 22D may determine whether or not the work target portion T specified by the work target portion information included in the design information corresponding to the work ID received by the reception unit 22A exists in the captured image by known image processing or the like.

The acquisition unit 22E acquires the captured images of the work target portion T and the tool portion 18A in the work space 2. For example, the control unit 22 drives the drive unit 30 so as to move the tool portion 18A of the arm mechanism 18 to the vicinity of the work position indicated by the work position information corresponding to the work ID for which the selection has been received. The control unit 22 controls the drive unit 30 on the basis of the work position information and the detection result of the distance sensor 14, thereby moving the arm mechanism 18 to a position where the image capturing unit 12 can image the work target portion T. The acquisition unit 22E acquires the captured image captured by the image capturing unit 12 in a state where the arm mechanism 18 is moved to a position where the work target portion T can be captured.

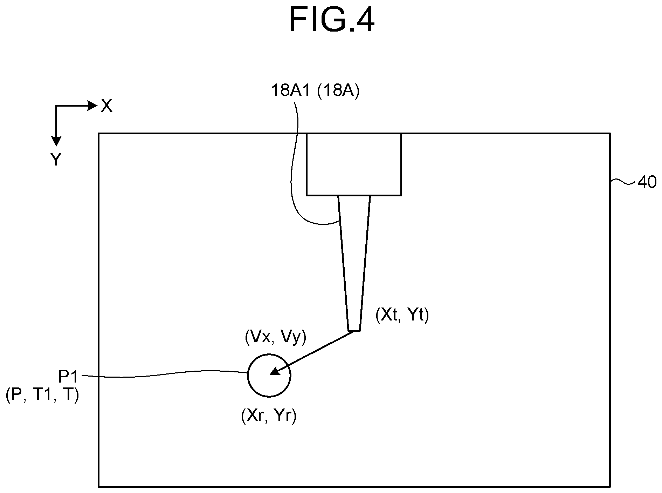

FIG. 4 is a schematic diagram of an example of a captured image 40. The captured image 40 is an example of a captured image captured in a state where the first determination unit 22B determines that laser irradiation is possible and the laser control unit 22C irradiates the work target portion T with the laser light L.

As illustrated in FIG. 4, the captured image 40 includes the tool portion 18A and the spot region P1. FIG. 4 illustrates a state in which the electric drill 18A1 is captured as the tool portion 18A. The spot region P1 is a spot region P of the laser light L1 formed on the work target 50 by irradiating the work target portion T with the laser light L1.

The deriving unit 22F derives the relative position between the work target portion T and the tool portion 18A based on the captured image.

It is assumed that the captured image 40 is acquired by the acquisition unit 22E. That is, it is assumed that the first determination unit 22B determines that laser irradiation is possible, and the laser control unit 22C acquires a captured image captured in a state where the work target portion T is irradiated with the laser light L. In this case, the deriving unit 22F specifies the spot region P1 of the laser light L1 included in the captured image 40 as the work target portion T. The deriving unit 22F then derives a relative position between the specified spot region P1 and the tool portion 18A.

Specifically, the deriving unit 22F specifies the position (Xr, Yr) of the spot region P1 in the captured image 40. The deriving unit 22F also specifies the position (Xt, Yt) of the tool portion 18A in the captured image 40. The deriving unit 22F specifies the position of the distal end of the tool portion 18A in the captured image 40 as the position of the tool portion 18A. The deriving unit 22F then specifies these positions (Xr, Yr) and positions (Xt, Yt) to specify the relative position between the spot region P1 and the tool portion 18A.

When it is determined that the work target portion T cannot be irradiated with laser light, the laser control unit 22C may control the laser irradiation unit 20 to irradiate a position separated from the work target portion T by the first distance in the first direction with the laser light L.

This will be described with reference to FIG. 2. In this case, the laser control unit 22C controls the laser irradiation unit 20 to irradiate a position separated by the first distance E in the first direction Z1 from the spot region P1 that is the position of the work target portion T with the laser light L2. Specifically, the laser control unit 22C specifies the work position information corresponding to the work ID received by the reception unit 22A in the management information. Then, the laser control unit 22C may transmit information indicating a position separated by the first distance E in the first direction Z1 from the work position indicated by the specified work position information to the laser irradiation unit 20 as new work position information. Based on the received work position information, the laser irradiation unit 20 irradiates a position separated by the first distance E in the first direction Z1 from the spot region P1 that is the position of the work target portion T with the laser light L2. Therefore, in the work target 50, a spot region P2 of the laser light L2 is formed at a position separated from the spot region P1 by the first distance E in the first direction Z1.

In this case, the deriving unit 22F may specify a region separated by the first distance E in the opposite direction of the first direction Z1 from the spot region P2 of the laser light L2 included in the captured image 40 as the work target portion T. Specifically, the deriving unit 22F specifies, as the position of the work target portion T, a region separated by a first distance E in a direction opposite to the first direction Z1 from the spot region P2 of the laser light L2 included in the captured image 40. Then, the deriving unit 22F may specify the relative position between the specified work target portion T and the tool portion 18A in the same manner as described above. That is, the deriving unit 22F may derive the position (Xr, Yr) of the work target portion T and the position (Xt, Yt) of the arm mechanism 18.

Returning to FIG. 3, the description will be continued. On the other hand, it is assumed that the first determination unit 22B determines that laser irradiation is impossible and the second determination unit 22D determines that template matching processing can be performed.

For example, in the following cases, it is determined that laser irradiation is impossible and template matching processing is possible.

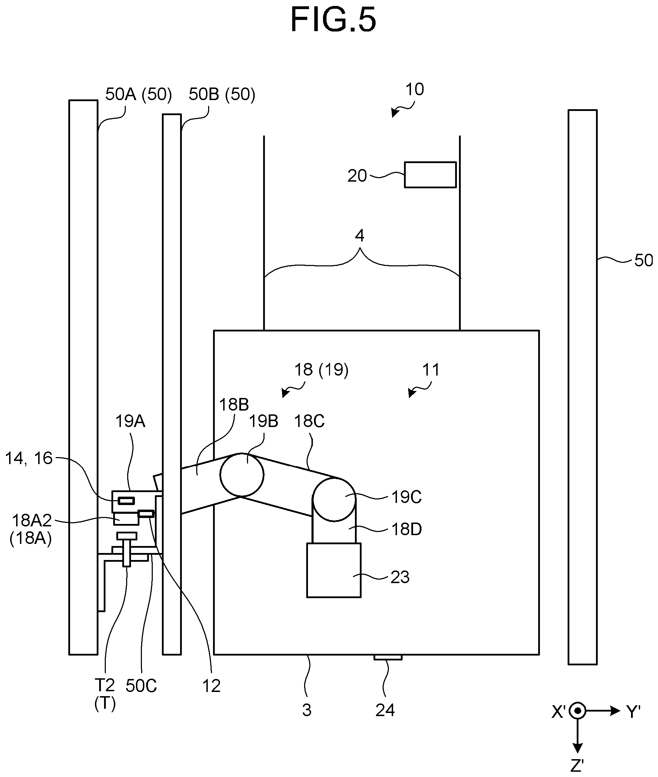

FIG. 5 is a schematic diagram of another example of the work support device 10. The work support device 10 illustrated in FIG. 5 includes an impact driver 18A2 instead of the electric drill 18A1 as the tool portion 18A. FIG. 5 illustrates an arrangement in which the work target portion T is a bolt T2 instead of the drilling target region T1. The bolt T2 is, for example, a bolt that connects members 50C provided to protrude from each of a work target 50A and a work target 50B. The work target 50A, the work target 50B, and the member 50C are examples of the work target 50.

Note that the work support device 10 illustrated in FIG. 5 has the same configuration as the work support device 10 illustrated in FIG. 2 except that the work target 50 further includes a work target 50A, a work target 50B, and a member 50C, the impact driver 18A2 is used instead of the electric drill 18A1, and the bolt T2 is used instead of the drilling target region T1.

As illustrated in FIG. 5, when the work target portion T is the bolt T2, the bolt T2 may not be captured by reflection. Therefore, in the design information regarding the work on the bolt T2, information indicating the presence of reflection by the laser light L is registered in advance as the work target portion information. Therefore, in this case, the first determination unit 22B determines that laser irradiation is impossible. In addition, the second determination unit 22D determines that the template matching processing can be performed by processing of determining that the bolt T2 that is the work target portion T exists in the acquired captured image.

In this case, the captured image acquired by the acquisition unit 22E includes the bolt T2 and the impact driver 18A2 as the work target portion T and the tool portion 18A.

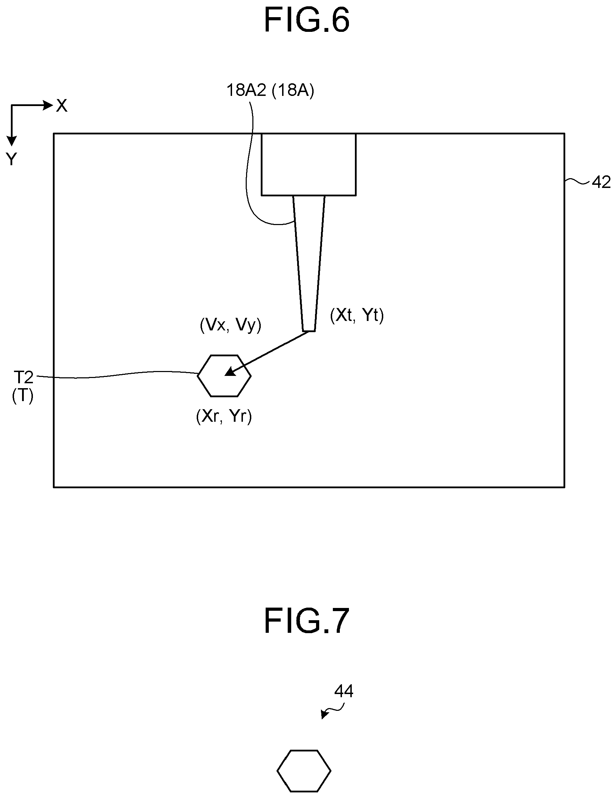

FIG. 6 is a schematic diagram illustrating an example of a captured image 42. The captured image 42 is an example of a captured image captured by the image capturing unit 12 when the first determination unit 22B determines that laser irradiation is impossible and the second determination unit 22D determines that template matching processing is possible.

As illustrated in FIG. 6, the captured image 42 includes the tool portion 18A and the work target portion T. FIG. 6 illustrates a state in which an image of the impact driver 18A2 is captured as the tool portion 18A and an image of the bolt T2 is captured as the work target portion T.

In this case, the deriving unit 22F specifies a region matching or similar to the template image included in the captured image 42 as the work target portion T.

FIG. 7 is a schematic diagram illustrating an example of a template image 44. For example, the template image 44 is registered in advance as information indicating the shape of the work target portion T in the design information corresponding to the work ID. The deriving unit 22F searches the template image 44 from the captured image 40 to specify a region matching or similar to the template image 44 as the bolt T2. Specifically, the deriving unit 22F specifies, as the bolt T2, a region that matches or is similar to the feature amount of the template image 44 in the captured image 40. Any feature amount may be used.

The deriving unit 22F may derive the relative position between the identified work target portion T and the tool portion 18A in the same manner as described above. That is, the deriving unit 22F derives the position (Xr, Yr) of the bolt T2 and the position (Xt, Yt) of the impact driver 18A2 in the captured image 42.

Returning to FIG. 3, the description will be continued. The drive control unit 22G controls the drive unit 30 of the arm mechanism 18 so that the position of the work target portion T and the position of the tool portion 18A coincide with each other based on the relative position between the work target portion T and the tool portion 18A derived by the deriving unit 22F.

Specifically, the drive control unit 22G controls the drive unit 30 so that the position of the tool portion 18A coincides with the position of the work target portion T, thereby controlling the position of each of the joint portions 19 of the arm mechanism 18. The drive control unit 22G derives a target position of each of the joint portions 19 with respect to each time, and controls the drive unit 30 so that each of the joint portions 19 is located at the derived target position at each time. By this control, the drive control unit 22G controls the drive unit 30 of the arm mechanism 18 so that the position of the work target portion T and the position of the tool portion 18A coincide with each other.

This will be described with reference to FIG. 4. For example, it is assumed that the position of the work target portion T (Xr, Yr) and the position of the tool portion 18A (Xt, Yt) are derived as relative positions by the deriving unit 22F.

In this case, the drive control unit 22G controls the drive unit 30 of the arm mechanism 18 such that the position (Xr, Yr) of the work target portion T coincides with the position (Xt, Yt) of the tool portion 18A. Therefore, the position of the distal end of the tool portion 18A is moved to the position of the work target portion T by the drive control of the drive control unit 22G.

Then, when the position of the distal end of the tool portion 18A reaches the position of the work target portion T, the drive control unit 22G brings the tool portion 18A closer to the work target portion T. The drive control unit 22G is only required to approach the tool portion 18A and the work target portion T using the distance detection result obtained by the distance sensor 14. Then, the drive control unit 22G may control the tool portion 18A to execute the work content represented by the work content information corresponding to the work ID received by the reception unit 22A. For example, it is assumed that the work content is drilling into the drilling target region T1. In this case, the drive control unit 22G is only required to drive and control the electric drill 18A1 so as to execute drilling into the drilling target region T1 of the work target 50 perpendicularly to the work target 50. In addition, it is assumed that the work content is bolt-fastening of the bolt T2. In this case, the drive control unit 22G may drive and control the bolt T2 so as to execute bolt-fastening of the bolt T2.

It is preferable that the drive control unit 22G further execute the following speed control process when controlling the drive unit 30 of the arm mechanism 18 so that the position (Xr, Yr) of the work target portion T coincides with the position (Xt, Yt) of the tool portion 18A.

This will be described with reference to FIG. 4. The drive control unit 22G preferably executes a speed control process on the drive unit 30 so that the tool portion 18A moves at a predetermined speed from the position (Xt, Yt) toward the position (Xr, Yr) of the work target portion T.

Specifically, the drive control unit 22G controls the drive unit 30 so as to move the position of the tool portion 18A to the position of the work target portion T at a speed in accordance with the distance between the work target portion T and the tool portion 18A.

Specifically, the drive control unit 22G controls the drive unit 30 so as to move the position of the tool portion 18A to the position of the work target portion T at a speed that is faster as the distance between the work target portion T and the tool portion 18A is longer and slower as the distance is shorter.

That is, the drive control unit 22G controls the drive unit 30 so as to move at a speed (Vx, Vy) satisfying the following equations (1) and (2). ${V}_{x} = K \left({X}_{r}-{X}_{t}\right)$ (1) ${V}_{y} = K \left({Y}_{r}-{Y}_{t}\right)$ (2)

In Equation (1), Vx is a moving speed in the X-axis direction in the captured image. In Equation (2), Vy represents a moving speed in the Y-axis direction in the captured image. K is a control gain, and an arbitrary value may be set.

Since the drive control unit 22G controls the drive unit 30 so as to move at a speed satisfying the above-described relationship, the tool portion 18A can be moved toward the work target portion T with high accuracy even when the work table 3 shakes during the movement of the tool portion 18A to the work target portion T.

The drive control unit 22G may control the drive unit 30 so as to move the position of the tool portion 18A to the position of the work target portion T at a speed in accordance with the change in the distance between the work target portion T and the tool portion 18A. In other words, the drive control unit 22G may control the drive unit 30 by proportional and integral speed control.

Specifically, the drive control unit 22G may control the drive unit 30 so as to move at a speed (Vx, Vy) satisfying the following equations (3) and (4). ${V}_{x} = K \left({X}_{r}-{X}_{t}\right) + {K}_{i} \int \left({X}_{r}-{X}_{t}\right) dt$ (3) ${V}_{y} = K \left({Y}_{r}-{Y}_{t}\right) + {K}_{i} \int \left({Y}_{r}-{Y}_{t}\right) dt$ (4)

In Equation (3), Vx is a moving speed in the X-axis direction in the captured image. In Equation (4), Vy is a moving speed in the Y-axis direction in the captured image. K is a control gain, and an arbitrary value may be set. Ki is an integral gain, and an arbitrary value may be set.

The shaking of the work table 3 may be unsteadily repeated. In such a case, it may be difficult to make the alignment error zero in the proportional control shown in the equations (1) and (2). Therefore, in this case, the drive control unit 22G controls the drive unit 30 so as to move at a speed that satisfies the relationships shown in the above-described equations (3) and (4), so that the tool portion 18A can be moved toward the work target portion T with high accuracy even when the shaking of the work table 3 is unsteadily repeated during the movement of the tool portion 18A to the work target portion T.

At the time of movement control of moving the tool portion 18A to the work target portion T and at the time of execution of the work content on the work target portion T by the tool portion 18A, the positions of the tool portion 18A and the work target portion T may be shifted due to shaking of the work table 3 or the like.

Therefore, it is preferable that the drive control unit 22G repeatedly executes the drive control of the drive unit 30 according to the captured image acquired by the acquisition unit 22E at the time of both the movement of the tool portion 18A to the work target portion T and the execution of the work content on the work target portion T by the tool portion 18A. That is, it is preferable that the drive control unit 22G repeatedly executes the drive control for controlling the drive unit 30 such that the position of the tool portion 18A based on the relative position derived from the captured image coincides with the position of the work target portion T during both the period of the movement control of the tool portion 18A and the period of the execution of the work content by the tool portion 18A.

By these processes, even when the work table 3 shakes, the drive control unit 22G can drive and control the drive unit 30 so as to move the tool portion 18A toward the work target portion T with high accuracy and maintain a state in which the position of the tool portion 18A matches the position of the work target portion T.

Note that, under the control of the drive control unit 22G, there is a case where the work table 3 shakes when the tool portion 18A is executing work of work content on the work target portion T. Due to this shake, a force may be applied from the work target portion T to the tool portion 18A.

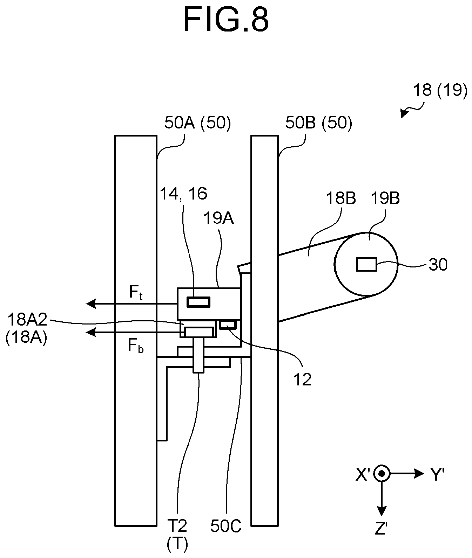

This will be described with reference to FIG. 8. FIG. 8 is a schematic diagram illustrating an example during execution of the bolt-fastening work of the bolt T2 by the impact driver 18A2. When the position of the impact driver 18A2 with respect to the bolt T2 is shifted due to shaking of the work table 3 or the like, a force may be applied from the bolt T2 to the impact driver 18A2. As described above, the force sensor 16 detects a force applied to the tool portion 18A from the outside such as the work target portion T. For example, it is assumed that the force sensor 16 detects the first force F_{b} as the force applied from the bolt T2 to the impact driver 18A2.

In this case, the drive control unit 22G preferably controls the drive unit 30 so as to balance out the first force F_{b} detected by the force sensor 16. Specifically, the drive control unit 22G controls the drive unit 30 of the arm mechanism 18 such that the force Fₜ having the same intensity and the same direction as the detected first force F_{b} is applied from the impact driver 18A2 to the bolt T2.

Therefore, the first force F_{b} applied from the bolt T2 to the impact driver 18A2 is balanced out (i.e., canceled). That is, in this case, the drive control unit 22G can drive the arm mechanism 18, which is the impact driver 18A2, so as to absorb the shaking of the work table 3.

Note that, by using an object having high back drivability such as a direct drive motor as the joint portion 19, adjustment may be performed such that the posture of the arm mechanism 18 smoothly changes with respect to the shaking of the work table 3.

The drive control unit 22G may further control the drive unit 30 according to the amount of shaking of the work table 3.

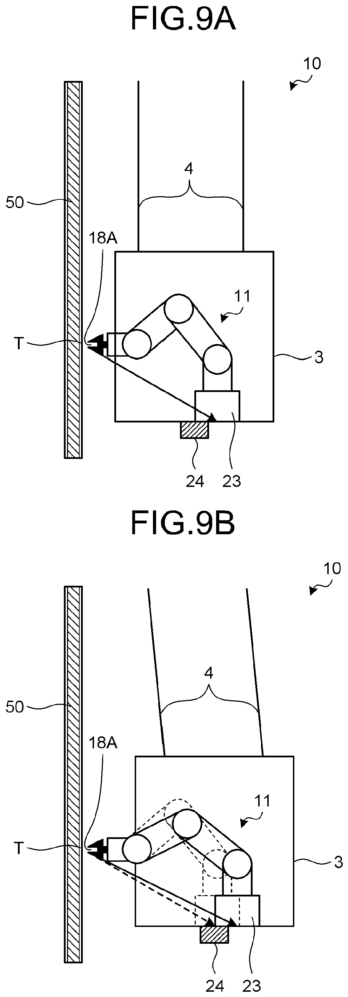

FIGS. 9A and 9B are explanatory diagrams of an example of control according to a shake amount of the work table 3.

For example, it is assumed that the position of the work table 3 with respect to the work target portion T is shifted from the position illustrated in FIG. 9A to the position illustrated in FIG. 9B.

The drive control unit 22G further derives the movement amount of the work table 3 with respect to the work target portion T based on the shake amount of the work table 3. The drive control unit 22G derives the shaking direction and amplitude of the work table 3 at each time as the movement amount of the work table 3 by time-integrating the shake amount detected by the shake amount sensor 24. Then, the drive control unit 22G further controls the position of the joint portion 19 so as to balance out the derived movement amount.

Specifically, at the time of work on the work target portion T by the tool portion 18A, an alignment error between the tool portion 18A and the work target portion T is preferably zero. Therefore, the drive control unit 22G uses the shaking direction and amplitude of the work table 3 derived as the movement amount of the work table 3 as the target movement amount of the robot mechanism unit 11 with respect to the distal end of the tool portion 18A. Then, the drive control unit 22G derives the target position of each of the joint portions 19 of the robot mechanism unit 11 by using the target movement amount and the inverse kinematics.

When moving the tool portion 18A to coincide with the position of the work target portion T and during work on the work target portion T by the tool portion 18A, the drive control unit 22G superimposes the derived target position on the target position of the joint portion 19 calculated for the movement and the work drive process. By these processes, the drive control unit 22G can further reduce the influence of the alignment error between the tool portion 18A and the work target portion T due to the shake of the work table 3.

Next, an example of information processing executed by the work support device 10 according to the present arrangement will be described.

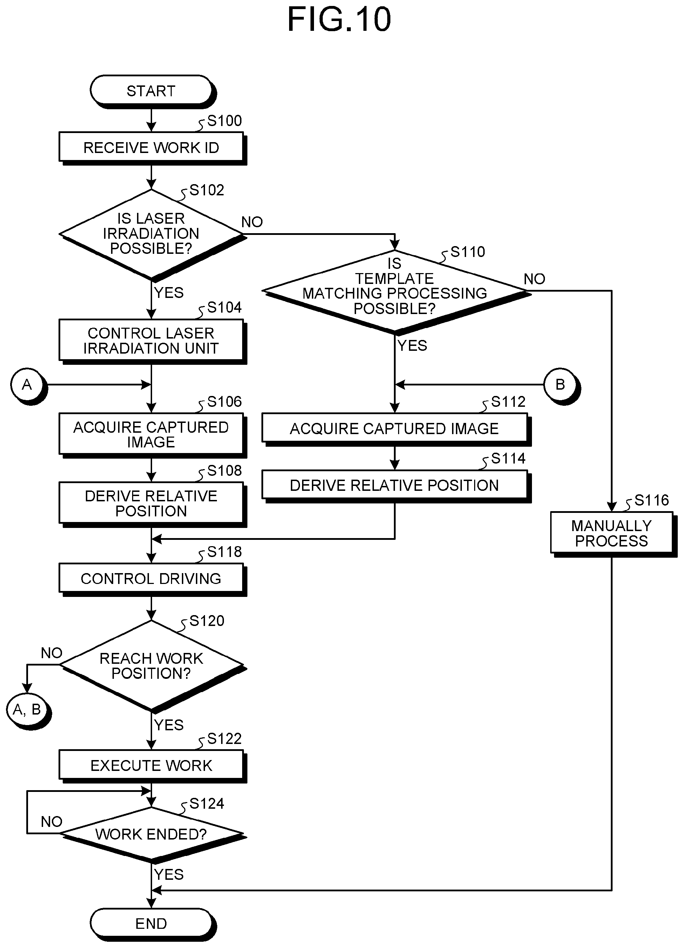

FIG. 10 is a flowchart illustrating an example of information processing executed by the work support device 10 according to the present arrangement.

The reception unit 22A receives the work ID from the UI unit 32 (step S100). The user selects a desired work ID included in the management information by operating the UI unit 32 at the start of work. The reception unit 22A receives the work ID selected by the user.

The first determination unit 22B determines whether laser irradiation is possible (step S102). The first determination unit 22B determines whether laser irradiation is possible by using information indicating the presence or absence of reflection by the laser light L included in the design information corresponding to the work ID received by the reception unit 22A.

When it is determined that laser irradiation is possible (step S102: Yes), the process proceeds to step S104. In step S104, the laser control unit 22C controls the laser irradiation unit 20 to irradiate the work target portion T with the laser light L (step S104). The laser control unit 22C specifies the work position information included in the design information corresponding to the work ID in the management information. Then, the laser control unit 22C controls the laser irradiator 20A to irradiate the work position indicated by the specified work position information with the laser light L. Therefore, under the control of the laser control unit 22C, the work position of the work target portion T is irradiated with the laser light L from the laser irradiator 20A of the laser irradiation unit 20.

Next, the acquisition unit 22E acquires the captured images of the work target portion T and the tool portion 18A in the work space 2 (step S106). For example, the acquisition unit 22E acquires the captured image 40 illustrated in FIG. 4.

Next, the deriving unit 22F derives the relative position between the work target portion T and the tool portion 18A based on the captured image 40 (step S108). For example, the deriving unit 22F derives the position (Xr, Yr) of the spot region P1 and the position (Xt, Yt) of the electric drill 18A1 in the captured image 40 as relative positions. Then, the process proceeds to step S118 described later.

On the other hand, when it is determined in step S102 that laser irradiation is impossible (step S102: No), the process proceeds to step S110.

In step S110, the second determination unit 22D determines whether template matching processing can be performed (step S110). For example, the second determination unit 22D determines whether template matching processing can be performed by determining whether the work target portion T exists in the captured image.

When it is determined that the template matching processing can be performed (step S110: Yes), the process proceeds to step S112.

In step S112, the acquisition unit 22E acquires the captured images of the work target portion T and the tool portion 18A in the work space 2 (step S112). For example, the acquisition unit 22E acquires the captured image 42 illustrated in FIG. 6.

Next, the deriving unit 22F derives the relative position between the work target portion T and the tool portion 18A based on the captured image 42 (step S114). For example, the deriving unit 22F specifies a region that matches or is similar to the template image 44 included in the captured image 42 as the bolt T2. Then, the deriving unit 22F derives the specified position (Xr, Yr) of the bolt T2 and the position (Xt, Yt) of the impact driver 18A2 as relative positions. Then, the process proceeds to step S118.

In step S118, the drive control unit 22G controls the drive unit 30 of the arm mechanism 18 so that the position of the work target portion T and the position of the tool portion 18A coincide with each other based on the relative position between the work target portion T and the tool portion 18A derived in step S108 or step S114 (step S118).

The drive control unit 22G determines whether or not the position of the tool portion 18A has reached the work position, which is the position of the work target portion T (step S120). When a negative determination is made in step S120 (step S120: No), the process returns to step S106 or step S112. Specifically, in a case where the deriving unit 22F derives the relative position from the captured image 40 in the immediately preceding process, the process returns to step S106. On the other hand, when the relative position is derived from the captured image 42 in the process immediately before the deriving unit 22F, the process may return to step S112.

When an affirmative determination is made in step S120 (step S120: Yes), the process proceeds to step S122.

In step S122, the drive control unit 22G brings the tool portion 18A close to the work target portion T, and controls the tool portion 18A to execute the work content indicated by the work content information corresponding to the work ID received in step S100 (step S122). By the processing in step S122, operations such as drilling into the drilling target region T1 by the electric drill 18A1 and bolt-fastening to the bolt T2 by the impact driver 18A2 are executed.

The control unit 22 repeats the negative determination (step S124: No) until it is determined that the work in step S122 is completed (step S122: Yes). When it is determined that the operation of step S122 has been completed (step S124: Yes), this routine is ended.

When a negative determination is made in step S124 (step S124: No), the process may return to step S106 or step S112. Specifically, in a case where the deriving unit 22F derives the relative position from the captured image 40 in the immediately preceding process, the process returns to step S106. On the other hand, when the relative position is derived from the captured image 42 in the process immediately before the deriving unit 22F, the process may return to step S112.

Furthermore, as described above, in the processing of steps S118 to S120, the drive control unit 22G preferably executes the speed control processing on the drive unit 30 such that the tool portion 18A moves at a predetermined speed from the position (Xt, Yt) toward the position (Xr, Yr) of the work target portion T. As described above, the predetermined speed is, for example, a speed satisfying the equations (1) and (2) or the equations (3) and (4).

Furthermore, as described above, during the execution of the work in step S122, the drive control unit 22G preferably further controls the drive unit 30 so as to balance out the first force F_{b} detected by the force sensor 16.

On the other hand, when a negative determination is made in step S110, the process proceeds to step S116. In step S116, manual processing of adjusting the position and posture of the arm mechanism 18 by manual operation of the user to execute work is executed (step S116). Then, this routine is ended.

As described above, the work support device 10 according to the present arrangement includes the arm mechanism 18, the second determination unit 22D, the acquisition unit 22E, the deriving unit 22F, and the drive control unit 22G. The arm mechanism 18 is a mechanism that is mounted on the work table 3 arranged in the work space 2 and is provided with the tool portion 18A at an end portion. The acquisition unit 22E acquires the captured images of the work target portion T and the tool portion 18A in the work space 2. The deriving unit 22F derives the relative position between the work target portion T and the tool portion 18A based on the captured image. The drive control unit 22G controls the drive unit 30 of the arm mechanism 18 such that the position of the work target portion T and the position of the tool portion 18A coincide with each other based on the relative position.

Here, in the related art, the position of the work target portion T is estimated from the 3D model of the work space 2, and work is performed on the estimated position. In the related art, the work on the work target portion T of the wall surface is supported by adjusting the inclination of the tool using the detection result of the angle between the wall surface and the tool.

However, the work table 3 disposed in the work space 2 may shake in the work space 2. Therefore, there is a case where the work position estimated in advance by a 3D model of the work space or the like deviates from the actual work position due to shaking of the work table 3 or the like. Even when the angle between the work target 50 and the tool portion 18A is detected, the position of the work target portion T and the position of the tool portion 18A in the work target 50 may be shifted due to the shaking of the work table 3. For this reason, in the conventional technique, accurate alignment is difficult due to shaking or the like of the work table 3, and the work accuracy may deteriorate.

On the other hand, the work support device 10 of the present arrangement derives the relative position from the captured image obtained by imaging the work target portion T and the tool portion 18A, and controls the drive unit 30 such that the position of the work target portion T and the position of the tool portion 18A coincide with each other based on the relative position.

Therefore, the work support device 10 of the present arrangement can accurately align the tool portion 18A and the work target portion T even when shaking occurs in the work table 3.

Therefore, the work support device 10 of the present arrangement can improve the work accuracy.

Next, an example of a hardware configuration of the control unit 22 and the control unit 20C in the work support device 10 according to the above-described arrangement will be described.

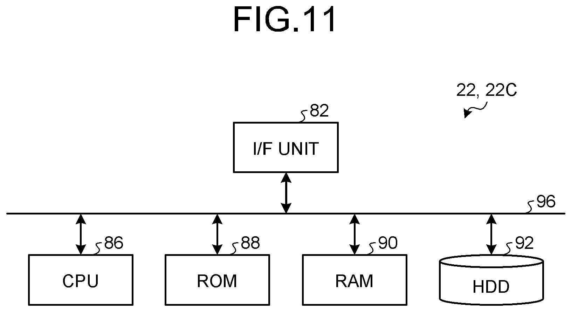

FIG. 11 is a hardware configuration diagram of an example of the control unit 22 and the laser control unit 22C.

The control unit 22 and the laser control unit 22C of the above-described arrangement include a control device such as a CPU 86, a storage device such as a read only memory (ROM) 88, a random access memory (RAM) 90, and a hard disk drive (HDD) 92, an I/F unit 82 that is an interface with various devices, and a bus 96 that connects the respective units, and have a hardware configuration using a normal computer.

In the control unit 22 and the laser control unit 22C of the above-described arrangement, the CPU 86 reads a program from the ROM 88 onto the RAM 90 and executes the program, whereby the above-described units are realized on a computer.

Note that the program for executing each of the above-described processes executed by the control unit 22 and the laser control unit 22C of the above-described arrangement may be stored in the HDD 92. In addition, the program for executing each of the above-described processes executed by the control unit 22 and the laser control unit 22C of the above-described arrangement may be provided by being incorporated in the ROM 88 in advance.

In addition, the program for executing the above-described processes executed by the control unit 22 and the laser control unit 22C of the above-described arrangements may be stored as a file in an installable format or an executable format in a computer-readable storage medium such as a CD-ROM, a CD-R, a memory card, a digital versatile disk (DVD), or a flexible disk (FD) and provided as a computer program product. In addition, the program for executing the above-described processing executed by the control unit 22 and the laser control unit 22C of the above-described arrangement may be stored on a computer connected to a network such as the Internet and provided by being downloaded via the network. In addition, the program for executing the above-described processing executed by the control unit 22 and the laser control unit 22C of the above-described arrangement may be provided or distributed via a network such as the Internet.

## Claims

1. A work support device (10) comprising:
an arm mechanism (18) mounted on a work table (3) disposed in a work space and provided with a tool portion (18A) at an end portion,
wherein
the work support device (10) comprises:
an acquisition unit (22E) configured to acquire a captured image of a work target portion and the tool portion (18A) in the work space;
a deriving unit (22F) configured to derive a relative position between the work target portion and the tool portion (18A) based on the captured image;
a drive control unit (22G) configured to control a drive unit (30) of the arm mechanism (18) based on the relative position such that a position of the work target portion and a position of the tool portion (18A) coincide with each other;
a laser irradiation unit (20) configured to emit laser light;
a first determination unit (22B) configured to determine whether laser irradiation is possible by determining whether information indicating presence or absence of reflection by the laser light included in work target portion information indicates absence of the reflection, by determining whether material information indicating a material of the work target portion is a material that reflects the laser light, or by determining whether a laser irradiator (20A) operates normally;
a laser control unit (22C) configured to control the laser irradiation unit (20) so as to irradiate the work target portion with laser light in a case where it is determined that laser irradiation is possible, wherein
when it is determined that laser irradiation is possible, the deriving unit (22F) is configured to specify a spot region of the laser light included in the captured image as the work target portion, and is configured to derive the relative position between the specified work target portion and the tool portion (18A); and
when it is determined that the work target portion cannot be irradiated with the laser light,
the laser control unit (22C) is configured to control the laser irradiation unit (20) so as to irradiate a position separated from the work target portion by a first distance in a first direction with laser light; and
the deriving unit (22F)
is configured to specify a region separated by the first distance in a direction opposite to the first direction from the spot region of the laser light included in the captured image as the work target portion, and
is configured to derive the relative position between the specified work target portion and the tool portion (18A).

2. The work support device (10) according to claim 1, wherein
the drive control unit (22G)
is configured to control the drive unit (30) so as to move the position of the tool portion (18A) to the position of the work target portion at a speed that is faster as a distance is longer and slower as the distance is shorter wherein the distance is between the work target portion (T) and the tool portion (18A).

3. The work support device (10) according to claim 1, wherein
the drive control unit (22G)
is configured to control the drive unit (30) so as to move the position of the tool portion (18A) to the position of the work target portion by proportional and integral speed control using a change in a distance between the work target portion (T) and the tool portion (18A).

4. The work support device (10) according to any one of claims 1 to 3, wherein
the arm mechanism (18) includes one or more arm portions (18B, 18C, 18D) connected by a joint portion (19, 19A, 19B, 19C) and the tool portion (18A),
the deriving unit (22F)
is configured to further derive a shaking direction and an amplitude of the work table (3) at each time as a movement amount of the work table (3) with respect to the work target portion by time-integrating a shake amount of the work table (3) detected by a shake amount sensor (24) provided on the work table (3), and
the drive control unit (22G)
is configured to further control a position of the joint portion (19, 19A, 19B, 19C) so as to balance out the derived movement amount.

5. The work support device (10) according to claim 1, further comprising:
a second determination unit (22D) configured to determine whether template matching processing is possible by determining whether or not the work target portion exists in the captured image acquired from an image capturing unit (12) provided at a position where captured images of the tool portion (18A) and the work target portion (T) can be acquired when it is determined that laser irradiation is not possible, wherein
the deriving unit (22F)
is configured to specify a region matching or similar to a template image included in the captured image as the work target portion when it is determined that template matching processing is possible, and is configured to derive a relative position between the specified work target portion and the tool portion (18A).

6. The work support device (10) according to any one of claims 1 to 5, further comprising:
a detector (16) configured to detect a first force applied from the work target portion to the tool portion (18A), wherein
the drive control unit (22G)
is configured to control the drive unit (30) so as to balance out the first force.

7. The work support device (10) according to any one of claims 1 to 6, wherein
the work space is
a hoistway for an elevator.

8. A work support method implemented by a work support device (10) including an arm mechanism (18) mounted on a work table (3) disposed in a work space and provided with a tool portion (18A) at an end portion, the method comprising:
acquiring a captured image of the work target portion in the work space and the tool portion (18A);
deriving a relative position between the work target portion and the tool portion (18A) based on the captured image; and
controlling a drive unit (30) of the arm mechanism (18) based on the relative position such that a position of the work target portion and a position of the tool portion (18A) coincide with each other;
emitting laser light;
determining whether laser irradiation is possible by determining whether information indicating presence or absence of reflection by the laser light included in work target portion information indicates absence of the reflection, by determining whether material information indicating a material of the work target portion is a material that does not reflect the laser light, or by determining whether a laser irradiator 20A operates normally;
controlling a laser irradiation unit (20) so as to irradiate the work target portion with laser light in a case where it is determined that laser irradiation is possible,
when it is determined that laser irradiation is possible,
specifying a spot region of the laser light included in the captured image as the work target portion, and deriving the relative position between the specified work target portion and the tool portion (18A); and
when it is determined that the work target portion cannot be irradiated with the laser light,
controlling the laser irradiation unit (20) so as to irradiate a position separated from the work target portion by a first distance in a first direction with laser light; and
specifying a region separated by the first distance in a direction opposite to the first direction from the spot region of the laser light included in the captured image as the work target portion and deriving the relative position between the specified work target portion and the tool portion (18A).

9. A computer program product having a computer readable medium including programmed instructions stored therein, wherein the instructions, when executed by a computer of a work support device (10) including an arm mechanism (18) mounted on a work table (3) disposed in a work space and provided with a tool portion (18A) at an end portion, cause the computer to perform:
acquiring a captured image of the work target portion in the work space and the tool portion (18A);
deriving a relative position between the work target portion and the tool portion (18A) based on the captured image; and
controlling a drive unit (30) of the arm mechanism (18) based on the relative position such that a position of the work target portion and a position of the tool portion (18A) coincide with each other;
emitting laser light;
determining whether laser irradiation is possible by determining whether information indicating presence or absence of reflection by the laser light included in work target portion information indicates absence of the reflection, by determining whether material information indicating a material of the work target portion is a material that does not reflect the laser light, or by determining whether a laser irradiator 20A operates normally;
controlling a laser irradiation unit (20) so as to irradiate the work target portion with laser light in a case where it is determined that laser irradiation is possible,
when it is determined that laser irradiation is possible,
specifying a spot region of the laser light included in the captured image as the work target portion, and deriving the relative position between the specified work target portion and the tool portion (18A); and
when it is determined that the work target portion cannot be irradiated with the laser light,
controlling the laser irradiation unit (20) so as to irradiate a position separated from the work target portion by a first distance in a first direction with laser light; and
specifying a region separated by the first distance in a direction opposite to the first direction from the spot region of the laser light included in the captured image as the work target portion and deriving the relative position between the specified work target portion and the tool portion (18A).

## Patentansprüche

1. Eine Arbeitsunterstützungsvorrichtung (10), umfassend:
einen Armmechanismus (18), der auf einem in einem Arbeitsraum angeordneten Arbeitstisch (3) montiert ist und an einem Endabschnitt mit einem Werkzeugabschnitt (18A) versehen ist, wobei
die Arbeitsunterstützungsvorrichtung (10) umfasst:
eine Erfassungseinheit (22E), konfiguriert zum Erfassen eines aufgenommenen Bildes eines Arbeitszielabschnitts und des Werkzeugabschnitts (18A) im Arbeitsraum;
eine Ableitungseinheit (22F), konfiguriert zum Ableiten einer relativen Position zwischen dem Arbeitszielabschnitt und dem Werkzeugabschnitt (18A) basierend auf dem aufgenommenen Bild;
eine Antriebssteuereinheit (22G), konfiguriert zum Steuern einer Antriebseinheit (30) des Armmechanismus (18) basierend auf der relativen Position, sodass eine Position des Arbeitszielabschnitts und eine Position des Werkzeugabschnitts (18A) miteinander übereinstimmen;
eine Laserbestrahlungseinheit (20), konfiguriert zum Emittieren von Laserlicht;
eine erste Bestimmungseinheit (22B), konfiguriert zum Bestimmen, ob eine Laserbestrahlung möglich ist, durch Bestimmen, ob Informationen, die ein Vorhandensein oder Fehlen einer Reflexion durch das Laserlicht anzeigen und in Arbeitszielabschnittsinformationen enthalten sind, das Fehlen der Reflexion anzeigen, durch Bestimmen, ob Materialinformationen, die ein Material des Arbeitszielabschnitts anzeigen, ein Material ist, das das Laserlicht reflektiert, oder durch Bestimmen, ob ein Laserstrahler (20A) normal arbeitet;
eine Lasersteuereinheit (22C), konfiguriert zum Steuern der Laserbestrahlungseinheit (20), um den Arbeitszielabschnitt mit Laserlicht in einem Fall zu bestrahlen, in dem bestimmt wird, dass eine Laserbestrahlung möglich ist, wobei
wenn bestimmt wird, dass eine Laserbestrahlung möglich ist, die Ableitungseinheit (22F) konfiguriert ist zum Spezifizieren eines Punktbereichs des Laserlichts, der in dem aufgenommenen Bild enthalten ist, als den Arbeitszielabschnitt, und konfiguriert ist zum Ableiten der relativen Position zwischen dem spezifizierten Arbeitszielabschnitt und dem Werkzeugabschnitt (18A); und
wenn bestimmt wird, dass der Arbeitszielabschnitt nicht mit dem Laserlicht bestrahlt werden kann,
die Lasersteuereinheit (22C) konfiguriert ist zum Steuern der Laserbestrahlungseinheit (20), um eine Position, die von dem Arbeitszielabschnitt durch eine erste Distanz in einer ersten Richtung getrennt ist, mit Laserlicht zu bestrahlen; und
die Ableitungseinheit (22F)
konfiguriert ist zum Spezifizieren eines Bereichs, der durch die erste Distanz in einer der ersten Richtung entgegengesetzten Richtung von dem Punktbereich des Laserlichts getrennt ist, der in dem aufgenommenen Bild enthalten ist, als den Arbeitszielabschnitt, und
konfiguriert ist zum Ableiten der relativen Position zwischen dem spezifizierten Arbeitszielabschnitt und dem Werkzeugabschnitt (18A).

2. Die Arbeitsunterstützungsvorrichtung (10) nach Anspruch 1, wobei
die Antriebssteuereinheit (22G)
konfiguriert ist zum Steuern der Antriebseinheit (30), um die Position des Werkzeugabschnitts (18A) zu der Position des Arbeitszielabschnitts mit einer Geschwindigkeit zu bewegen, die schneller ist, wenn eine Distanz größer ist, und langsamer ist, wenn die Distanz kürzer ist, wobei die Distanz zwischen dem Arbeitszielabschnitt (T) und dem Werkzeugabschnitt (18A) liegt.

3. Die Arbeitsunterstützungsvorrichtung (10) nach Anspruch 1, wobei
die Antriebssteuereinheit (22G)
konfiguriert ist zum Steuern der Antriebseinheit (30), um die Position des Werkzeugabschnitts (18A) zu der Position des Arbeitszielabschnitts durch proportionale und integrale Geschwindigkeitssteuerung unter Verwendung einer Änderung einer Distanz zwischen dem Arbeitszielabschnitt (T) und dem Werkzeugabschnitt (18A) zu bewegen.

4. Die Arbeitsunterstützungsvorrichtung (10) nach einem der Ansprüche 1 bis 3, wobei
der Armmechanismus (18) einen oder mehrere Armabschnitte (18B, 18C, 18D), die durch einen Gelenkabschnitt (19, 19A, 19B, 19C) verbunden sind, und den Werkzeugabschnitt (18A) beinhaltet, wobei
die Ableitungseinheit (22F)
konfiguriert ist zum weiteren Ableiten einer Schüttelrichtung und einer Amplitude des Arbeitstisches (3) zu jeder Zeit als einen Bewegungsbetrag des Arbeitstisches (3) in Bezug auf den Arbeitszielabschnitt durch Zeitintegration eines Schüttelbetrags des Arbeitstisches (3), der von einem auf dem Arbeitstisch (3) vorgesehenen Schüttelbetragssensor (24) erfasst wird, und
die Antriebssteuereinheit (22G)
konfiguriert ist zum weiteren Steuern einer Position des Gelenkabschnitts (19, 19A, 19B, 19C), um den abgeleiteten Bewegungsbetrag auszugleichen.

5. Die Arbeitsunterstützungsvorrichtung (10) nach Anspruch 1, ferner umfassend:
eine zweite Bestimmungseinheit (22D), konfiguriert zum Bestimmen, ob eine Vorlagenabgleichsverarbeitung möglich ist, durch Bestimmen, ob der Arbeitszielabschnitt in dem aufgenommenen Bild existiert oder nicht, das von einer Bildaufnahmeeinheit (12) erfasst wird, die an einer Position bereitgestellt ist, an der aufgenommene Bilder des Werkzeugabschnitts (18A) und des Arbeitszielabschnitts (T) erfasst werden können, wenn bestimmt wird, dass eine Laserbestrahlung nicht möglich ist, wobei
die Ableitungseinheit (22F)
konfiguriert ist zum Spezifizieren eines Bereichs, der mit einem in dem aufgenommenen Bild enthaltenen Vorlagenbild übereinstimmt oder diesem ähnlich ist, als den Arbeitszielabschnitt, wenn bestimmt wird, dass die Vorlagenabgleichsverarbeitung möglich ist, und konfiguriert ist zum Ableiten einer relativen Position zwischen dem spezifizierten Arbeitszielabschnitt und dem Werkzeugabschnitt (18A).

6. Die Arbeitsunterstützungsvorrichtung (10) nach einem der Ansprüche 1 bis 5, ferner umfassend:
einen Detektor (16), konfiguriert zum Detektieren einer ersten Kraft, die von dem Arbeitszielabschnitt auf den Werkzeugabschnitt (18A) ausgeübt wird, wobei
die Antriebssteuereinheit (22G)
konfiguriert ist zum Steuern der Antriebseinheit (30), um die erste Kraft auszugleichen.

7. Die Arbeitsunterstützungsvorrichtung (10) nach einem der Ansprüche 1 bis 6, wobei
der Arbeitsraum
ein Schacht für einen Aufzug ist.

8. Ein Arbeitsunterstützungsverfahren, implementiert durch eine Arbeitsunterstützungsvorrichtung (10), die einen Armmechanismus (18) beinhaltet, der auf einem in einem Arbeitsraum angeordneten Arbeitstisch (3) montiert ist und an einem Endabschnitt mit einem Werkzeugabschnitt (18A) versehen ist, wobei das Verfahren umfasst:
Erfassen eines aufgenommenen Bildes des Arbeitszielabschnitts im Arbeitsraum und des Werkzeugabschnitts (18A);
Ableiten einer relativen Position zwischen dem Arbeitszielabschnitt und dem Werkzeugabschnitt (18A) basierend auf dem aufgenommenen Bild; und
Steuern einer Antriebseinheit (30) des Armmechanismus (18) basierend auf der relativen Position, sodass eine Position des Arbeitszielabschnitts und eine Position des Werkzeugabschnitts (18A) miteinander übereinstimmen;
Emittieren von Laserlicht;
Bestimmen, ob eine Laserbestrahlung möglich ist, durch Bestimmen, ob Informationen, die ein Vorhandensein oder Fehlen einer Reflexion durch das Laserlicht anzeigen und in Arbeitszielabschnittsinformationen enthalten sind, das Fehlen der Reflexion anzeigen, durch Bestimmen, ob Materialinformationen, die ein Material des Arbeitszielabschnitts anzeigen, ein Material ist, das das Laserlicht nicht reflektiert, oder durch Bestimmen, ob ein Laserstrahler 20A normal arbeitet;
Steuern einer Laserbestrahlungseinheit (20), um den Arbeitszielabschnitt mit Laserlicht in einem Fall zu bestrahlen, in dem bestimmt wird, dass eine Laserbestrahlung möglich ist,
wenn bestimmt wird, dass eine Laserbestrahlung möglich ist,
Spezifizieren eines Punktbereichs des Laserlichts, der in dem aufgenommenen Bild enthalten ist, als den Arbeitszielabschnitt, und Ableiten der relativen Position zwischen dem spezifizierten Arbeitszielabschnitt und dem Werkzeugabschnitt (18A); und
wenn bestimmt wird, dass der Arbeitszielabschnitt nicht mit dem Laserlicht bestrahlt werden kann,
Steuern der Laserbestrahlungseinheit (20), um eine Position, die von dem Arbeitszielabschnitt durch eine erste Distanz in einer ersten Richtung getrennt ist, mit Laserlicht zu bestrahlen; und
Spezifizieren eines Bereichs, der durch die erste Distanz in einer der ersten Richtung entgegengesetzten Richtung von dem Punktbereich des Laserlichts getrennt ist, der in dem aufgenommenen Bild enthalten ist, als den Arbeitszielabschnitt und Ableiten der relativen Position zwischen dem spezifizierten Arbeitszielabschnitt und dem Werkzeugabschnitt (18A).

9. Ein Computerprogrammprodukt mit einem computerlesbaren Medium, das darin gespeicherte programmierte Anweisungen beinhaltet, wobei die Anweisungen, wenn sie von einem Computer einer Arbeitsunterstützungsvorrichtung (10) ausgeführt werden, die einen Armmechanismus (18) beinhaltet, der auf einem in einem Arbeitsraum angeordneten Arbeitstisch (3) montiert ist und an einem Endabschnitt mit einem Werkzeugabschnitt (18A) versehen ist, den Computer veranlassen zum Durchführen von:
Erfassen eines aufgenommenen Bildes des Arbeitszielabschnitts im Arbeitsraum und des Werkzeugabschnitts (18A);
Ableiten einer relativen Position zwischen dem Arbeitszielabschnitt und dem Werkzeugabschnitt (18A) basierend auf dem aufgenommenen Bild; und
Steuern einer Antriebseinheit (30) des Armmechanismus (18) basierend auf der relativen Position, sodass eine Position des Arbeitszielabschnitts und eine Position des Werkzeugabschnitts (18A) miteinander übereinstimmen;
Emittieren von Laserlicht;
Bestimmen, ob eine Laserbestrahlung möglich ist, durch Bestimmen, ob Informationen, die ein Vorhandensein oder Fehlen einer Reflexion durch das Laserlicht anzeigen und in Arbeitszielabschnittsinformationen enthalten sind, das Fehlen der Reflexion anzeigen, durch Bestimmen, ob Materialinformationen, die ein Material des Arbeitszielabschnitts anzeigen, ein Material ist, das das Laserlicht nicht reflektiert, oder durch Bestimmen, ob ein Laserstrahler 20A normal arbeitet;
Steuern einer Laserbestrahlungseinheit (20), um den Arbeitszielabschnitt mit Laserlicht in einem Fall zu bestrahlen, in dem bestimmt wird, dass eine Laserbestrahlung möglich ist,
wenn bestimmt wird, dass eine Laserbestrahlung möglich ist,
Spezifizieren eines Punktbereichs des Laserlichts, der in dem aufgenommenen Bild enthalten ist, als den Arbeitszielabschnitt, und Ableiten der relativen Position zwischen dem spezifizierten Arbeitszielabschnitt und dem Werkzeugabschnitt (18A); und
wenn bestimmt wird, dass der Arbeitszielabschnitt nicht mit dem Laserlicht bestrahlt werden kann,
Steuern der Laserbestrahlungseinheit (20), um eine Position, die von dem Arbeitszielabschnitt durch eine erste Distanz in einer ersten Richtung getrennt ist, mit Laserlicht zu bestrahlen; und
Spezifizieren eines Bereichs, der durch die erste Distanz in einer der ersten Richtung entgegengesetzten Richtung von dem Punktbereich des Laserlichts getrennt ist, der in dem aufgenommenen Bild enthalten ist, als den Arbeitszielabschnitt und Ableiten der relativen Position zwischen dem spezifizierten Arbeitszielabschnitt und dem Werkzeugabschnitt (18A).

## Revendications

1. Dispositif d'assistance de travail (10) comprenant :
un mécanisme de bras (18) monté sur une table de travail (3) disposée dans un espace de travail et muni d'une partie d'outil (18A) à une extrémité,
dans lequel
le dispositif d'assistance de travail (10) comprend :
une unité d'acquisition (22E) configurée pour acquérir une image capturée d'une partie de cible de travail et de la partie d'outil (18A) dans l'espace de travail ;
une unité de dérivation (22F) configurée pour dériver une position relative entre la partie de cible de travail et la partie d'outil (18A) sur la base de l'image capturée ;
une unité de commande d'entraînement (22G) configurée pour commander une unité d'entraînement (30) du mécanisme de bras (18) sur la base de la position relative, de telle sorte qu'une position de la partie de cible de travail et une position de la partie d'outil (18A) coïncident l'une avec l'autre ;
une unité d'irradiation laser (20) configurée pour émettre une lumière laser ;
une première unité de détermination (22B) configurée pour déterminer si l'irradiation laser est possible en déterminant si des informations indiquant une présence ou absence de réflexion de la lumière laser incluses dans des informations de partie de cible de travail indiquent une absence de réflexion, en déterminant si des informations de matériau indiquant qu'un matériau de la partie de cible de travail est un matériau qui réfléchit la lumière laser, ou en déterminant si un émetteur laser (20A) fonctionne normalement ;
une unité de commande laser (22C) configurée pour commander l'unité d'irradiation laser (20) de manière à irradier la partie de cible de travail avec de la lumière laser dans un cas où il est déterminé que l'irradiation laser est possible, dans laquelle
lorsqu'il est déterminé que de l'irradiation laser est possible, l'unité de de dérivation (22F) est configurée pour spécifier une zone de focalisation de la lumière laser incluse dans l'image capturée comme la partie de cible de travail, et est configurée pour dériver la position relative entre la partie de cible de travail spécifiée et la partie d'outil (18A) ; et
lorsqu'il est déterminé que la partie de cible de travail ne peut pas être irradiée par la lumière laser, l'unité de commande laser (22C) est configurée pour commander l'unité d'irradiation laser (20) de manière à irradier par une lumière laser une position située à une première distance de la partie de cible de travail dans une première direction ; et
l'unité de de dérivation (22F)
est configurée pour spécifier une zone située à la première distance dans une direction opposée à la première direction, par rapport à la zone de focalisation de la lumière laser incluse dans l'image capturée comme partie de cible de travail, et
est configurée pour dériver la position relative entre la partie de cible de travail spécifiée et la partie d'outil (18A).

2. Dispositif d'assistance de travail (10) selon la revendication 1, dans lequel
l'unité de commande d'entraînement (22G)
est configurée pour commander l'unité d'entraînement (30) de manière à déplacer la position de la partie d'outil (18A) vers la position de la partie de cible de travail à une vitesse qui est d'autant plus rapide qu'une distance est grande et d'autant plus lente que la distance est courte, la distance étant entre la partie de cible de travail (T) et la partie d'outil (18A).

3. Dispositif d'assistance de travail (10) selon la revendication 1, dans lequel
l'unité de commande d'entraînement (22G)
est configurée pour commander l'unité d'entraînement (30) de manière à déplacer la position de la partie d'outil (18A) jusqu'à la position de la partie de cible de travail au moyen d'une commande de vitesse proportionnelle et intégrale utilisant une variation d'une distance entre la partie de cible de travail (T) et la partie d'outil (18A).

4. Dispositif d'assistance de travail (10) selon l'une quelconque des revendications 1 à 3, dans lequel
le mécanisme de bras (18) comprend une ou plusieurs parties de bras (18B, 18C, 18D) reliées par une partie d'articulation (19, 19A, 19B, 19C) et la partie d'outil (18A),
l'unité de de dérivation (22F)
est configurée pour déterminer en outre une direction de vibration et une amplitude de la table de travail (3) à chaque instant sous la forme d'une quantité de déplacement de la table de travail (3) par rapport à la partie de cible de travail en intégrant dans le temps une quantité de vibration de la table de travail (3) détectée par un capteur de quantité de vibration (24) prévu sur la table de travail (3), et
l'unité de commande d'entraînement (22G)
est configurée pour commander en outre une position de la partie d'articulation (19, 19A, 19B, 19C) de manière à compenser la quantité de déplacement déterminée.

5. Dispositif d'assistance de travail (10) selon la revendication 1, comprenant en outre :
une deuxième unité de détermination (22D) configurée pour déterminer si un traitement de correspondance de motif est possible en déterminant si la partie de cible de travail existe ou non dans l'image capturée acquise par une unité de capture d'image (12) prévue à une position où des images capturées de la partie d'outil (18A) et de la partie de cible de travail (T) peuvent être acquises lorsqu'il est déterminé que l'irradiation laser n'est pas possible, dans lequel
l'unité de dérivation (22F)
est configurée pour spécifier une région correspondant ou similaire à une image de motif incluse dans l'image capturée en tant que partie de cible de travail lorsqu'il est déterminé que le traitement de correspondance de motif est possible, et est configurée pour dériver une position relative entre la partie de cible de travail spécifiée et la partie d'outil (18A).

6. Dispositif d'assistance de travail (10) selon l'une quelconque des revendications 1 à 5, comprenant en outre :
un détecteur (16) configuré pour détecter une première force appliquée depuis la partie de cible de travail vers la partie d'outil (18A), dans lequel
l'unité de commande d'entraînement (22G)
est configurée pour commander l'unité d'entraînement (30) de manière à compenser la première force.

7. Dispositif d'assistance de travail (10) selon l'une quelconque des revendications 1 à 6, dans lequel
l'espace de travail est une cage d'ascenseur.

8. Procédé d'assistance de travail mis en œuvre par un dispositif d'assistance de travail (10) comprenant un mécanisme de bras (18) monté sur une table de travail (3) disposée dans un espace de travail et muni d'une partie d'outil (18A) à une extrémité, le procédé comprenant :
l'acquisition d'une image capturée de la partie de cible de travail dans l'espace de travail et de la partie d'outil (18A) ;
la dérivation d'une position relative entre la partie de cible de travail et la partie d'outil (18A) sur la base de l'image capturée ; et
la commande d'une unité d'entraînement (30) du mécanisme de bras (18) sur la base de la position relative, de telle sorte qu'une position de la partie de cible de travail et une position de la partie d'outil (18A) coïncident l'une avec l'autre ;
l'émission d'une lumière laser ;
la détermination de si l'irradiation laser est possible en déterminant si des informations indiquant une présence ou absence de réflexion de la lumière laser incluses dans des informations de partie de cible de travail indiquent une absence de réflexion, en déterminant si des informations de matériau indiquant qu'un matériau de la partie de cible de travail est un matériau qui ne réfléchit pas la lumière laser, ou en déterminant si un émetteur laser (20A) fonctionne normalement ;
la commande d'une unité d'irradiation laser (20) de manière à irradier la partie de cible de travail avec une lumière laser dans un cas où il est déterminé que l'irradiation laser est possible,
lorsqu'il est déterminé que l'irradiation laser est possible,
la spécification d'une zone de focalisation de la lumière laser incluse dans l'image capturée comme la partie de cible de travail, et la dérivation de la position relative entre la partie de cible de travail spécifiée et la partie d'outil (18A) ; et
lorsqu'il est déterminé que la partie de cible de travail ne peut pas être irradiée par la lumière laser, la commande de l'unité d'irradiation laser (20) de manière à irradier une position située à une première distance de la partie de cible de travail dans une première direction avec une lumière laser ; et
la spécification d'une zone située à la première distance dans une direction opposée à la première direction, par rapport à la zone de focalisation de la lumière laser incluse dans l'image capturée comme partie de cible de travail, et la dérivation de la position relative entre la partie de cible de travail spécifiée et la partie d'outil (18A).

9. Produit logiciel comportant un d'assistance lisible par ordinateur sur lequel sont stockées des instructions programmées, dans lequel les instructions, lorsqu'elles sont exécutées par un ordinateur d'un dispositif d'assistance de travail (10) comprenant un mécanisme de bras (18) monté sur une table de travail (3) disposée dans un espace de travail et muni d'une partie d'outil (18A) à une extrémité, amènent l'ordinateur à effectuer :
l'acquisition d'une image capturée de la partie de cible de travail dans l'espace de travail et de la partie d'outil (18A) ;
la dérivation d'une position relative entre la partie de cible de travail et la partie d'outil (18A) sur la base de l'image capturée ; et
la commande d'une unité d'entraînement (30) du mécanisme de bras (18) sur la base de la position relative, de telle sorte qu'une position de la partie de cible de travail et une position de la partie d'outil (18A) coïncident l'une avec l'autre ;
l'émission d'une lumière laser ;
la détermination de si l'irradiation laser est possible en déterminant si des informations indiquant une présence ou absence de réflexion de la lumière laser incluses dans des informations de partie de cible de travail indiquent une absence de réflexion, en déterminant si des informations de matériau indiquant qu'un matériau de la partie de cible de travail est un matériau qui ne réfléchit pas la lumière laser, ou en déterminant si un émetteur laser (20A) fonctionne normalement ;
la commande d'une unité d'irradiation laser (20) de manière à irradier la partie de cible de travail avec une lumière laser dans un cas où il est déterminé que l'irradiation laser est possible,
lorsqu'il est déterminé que l'irradiation laser est possible,
la spécification d'une zone de focalisation de la lumière laser incluse dans l'image capturée comme la partie de cible de travail, et la dérivation de la position relative entre la partie de cible de travail spécifiée et la partie d'outil (18A) ; et
lorsqu'il est déterminé que la partie de cible de travail ne peut pas être irradiée par la lumière laser,
la commande de l'unité d'irradiation laser (20) de manière à irradier une position située à une première distance de la partie de cible de travail dans une première direction avec une lumière laser ; et
la spécification d'une zone située à la première distance dans une direction opposée à la première direction, par rapport à la zone de focalisation de la lumière laser incluse dans l'image capturée comme partie de cible de travail, et la dérivation de la position relative entre la partie de cible de travail spécifiée et la partie d'outil (18A).
